# EUROPÄISCHE PATENTANMELDUNG

(11) **EP 2 471 423 A1**
(43) Veröffentlichungstag der Anmeldung: **04.07.2012**
(21) Anmeldenummer: 10016188.4
(22) Anmeldetag: 30.12.2010
(51) Int. Cl.: A47J 31/44

(54) **Verfahren zum automatischen Erzeugen von Milchschaum sowie Milchschäumvorrichtung**

(71) Anmelder: Jura Elektroapparate AG, 4626 Niederbuchsiten (CH)
(72) Erfinder: Reyhanloo, Shahryar, 4573 Lohn-Ammannsegg (CH)
(74) Vertreter: EGLI-EUROPEAN PATENT ATTORNEYS

(57) **Zusammenfassung**

Es wird ein Verfahren zum automatischen Erzeugen von Milchschaum in einer Milchschäumvorrichtung sowie eine Milchschäumvorrichtung zum automatischen Erzeugen von Milchschaum angegeben. Die Milchschäumvorrichtung (100) weist hierbei wenigstens einen Hohlraum (10), einen Dampfeinlasskanal (11) zum Einleiten von Dampf in den Hohlraum (10), einen Milcheinlasskanal (13) zum Einleiten von Milch in den Hohlraum (10) sowie einen Auslasskanal (70) zur Abgabe von Milchschaum aus der Milchschäumvorrichtung (100) auf, wobei die jeweiligen Kanäle jeweils direkt oder indirekt in den Hohlraum (10) münden. Mit dem Ziel, ein Verfahren und eine Milchschäumvorrichtung anzugeben, mittels derer ein organoleptisch und geschmacklich optimierter Milchschaum automatisch erzeugt werden kann, ist erfindungsgemäss vorgesehen, dass Dampf, vorzugsweise Wasserdampf in den Dampfeinlasskanal (11) eingeleitet wird, um Milch in den Hohlraum (10) strömen zu lassen, zu verwirbeln und anschliessend in den Auslasskanal (70) auszugeben, wobei in einem zumindest von der Milch durchströmten Bereich der Milchschäumvorrichtung (100) ein Süssungsmittel (80) vorgesehen ist.

## Beschreibung

Die Erfindung betrifft ein Verfahren zum automatischen Erzeugen von Milchschaum in einer Milchschäumvorrichtung sowie eine Milchschäumvorrichtung zum automatischen Erzeugen von Milchschaum.

Aus der Technik sind automatische Milchschäumvorrichtungen bekannt, welche beispielsweise an Kaffeevollautomaten angeordnet sein können, wobei der Milchschaum für Kaffeegetränke wie beispielsweise Cappuccino automatisch mittels einer solchen bekannten Milchschäumvorrichtung erzeugt und an einem Ende eines Milchschaum-Ausgabekanals ausgegeben wird. In derartigen Milchschäumvorrichtungen wird zum Ansaugen und Weitertransportieren sowie zum notwendigen Verwirbeln der Milch der Venturi-Effekt ausgenutzt, wobei in einem Bereich der bekannten Milchschäumvorrichtung heisser Dampf, in der Regel Wasserdampf, eingeleitet wird, sodass dieser Dampf an einem Milcheinlasskanal vorbeiströmt und dabei einen Unterdruck erzeugt, wobei infolge des Unterdrucks jeweils Milch durch den Milcheinlasskanal aus einem Vorratsbehälter angesaugt wird.

Diese mittels des Dampfes angesaugte Milch durchströmt im Inneren einer solchen bekannten Milchschäumvorrichtung einen Hohlraum und wird dort verwirbelt. Zusätzlich ist es bekannt, bei derartigen bekannten Milchschäumvorrichtungen einen Lufteinlasskanal vorzusehen, wodurch beim Vorbeiströmen des Wasserdampfes zusätzlich zur Milch auch Luft angesaugt wird, welche zusammen mit der Milch in dem Hohlraum verwirbelt wird. Aus dem Hohlraum gelangt die Milch bzw. das Milch-Dampf-Gemisch, ggf. angereichert mit Luft zu einem Milch-Dampf-Luft-Gemisch, in eine sogenannte Emulsionskammer, in welcher der Aufschäumvorgang abgeschlossen und das verwirbelte Gemisch abgebremst wird. An die Emulsionskammer schliesst sich ein Ausgabekanal für das erzeugte Gemisch an, welcher aus der Milchschäumvorrichtung herausführt und in der Regel in einer Milchschaum-Ausgabeeinrichtung des Kaffeevollautomaten mündet.

Ausgehend von der geschilderten Problemstellung liegt der vorliegenden Erfindung die Aufgabe zugrunde, ein Verfahren zum automatischen Erzeugen von Milchschaum anzugeben, welches einen organoleptisch und geschmacklich optimierten Milchschaum liefert, welcher insbesondere fein, dicht, sämig und geschmacklich ansprechend ist. Weiterhin soll eine entsprechende Milchschäumvorrichtung zum automatischen Erzeugen von Milchschaum angeben werden, mit welcher das erfindungsgemässe Verfahren durchführbar ist.

Diese Aufgabe wird durch ein Verfahren mit den Merkmalen des Patentanspruchs 1 gelöst.

Das Verfahren zum automatischen Erzeugen von Milchschaum beruht auf einer Milchschäumvorrichtung, welche wenigstens einen Hohlraum, einen Dampfeinlasskanal zum Einleiten von Dampf in den Hohlraum, einen Milcheinlasskanal zum Einleiten von Milch in den Hohlraum und einen Auslasskanal zur Abgabe von Milchschaum aus der Milchschäumvorrichtung aufweist, wobei die jeweiligen Kanäle jeweils mit dem Hohlraum direkt oder indirekt verbunden sind. Das Verfahren weist zumindest die folgenden Verfahrensschritte auf: (i) Einleiten von Dampf in den Dampfeinlasskanal, um Milch in den Hohlraum strömen zu lassen und zu verwirbeln, und (ii) Ausgabe zumindest der verwirbelten Milch in den Auslasskanal.

Gemäss der Erfindung wird innerhalb der Milchschäumvorrichtung ein Süssungsmittel in einen zumindest von der Milch oder ggf. von einem Milch-Dampf-Gemisch oder von einem Milch-Luft-Dampf-Gemisch durchströmten Bereich der Milchschäumvorrichtung eingebracht.

Das erfindungsgemässe Verfahren weist wesentliche Vorteile gegenüber dem Stand der Technik auf. Zum einen wirkt sich das Beimengen des Süssungsmittels, vorzugsweise Zucker, in einem unmittelbar von der Milch während des Milchschäumvorganges durchströmten Bereich im Wesentlichen gleichmässig auf die gesamte, die Milchschäumvorrichtung durchströmende Milchmenge aus, wodurch ein gesüsster Milchschaum entsteht, welcher überraschenderweise (im Vergleich zu Milchschaum, dem beim Aufschäumen der jeweiligen Milch kein Süssungsmittel beigemengt wurde) eine feinere und dichtere Struktur aufweist und sämiger ist, was sich positiv auf den Geschmack und die Organoleptik während des Verzehrs eines mit einem solchen Milchschaum zubereiteten Kaffeegetränkes auswirkt.

Des Weiteren ist so sichergestellt, dass die geschmacksverbessernden, süssenden Eigenschaften des Süssungsmittels sehr gleichmässig bezogen auf die gesamte die Milchschäumvorrichtung durchströmte Milch verteilt sind, so dass der gesamte Milchschaum süss schmeckt.

Nicht zuletzt wird durch das Einbringen des Süssungsmittels bereits innerhalb der Milchschäumvorrichtung erreicht, dass bereits gesüsster Milchschaum aus der Milchschäumvorrichtung beim Durchführen des erfindungsgemässen Verfahrens ausgegeben wird, was ein Nachsüssen des mit einem solchen Milchschaum versehenen Kaffeegetränkes verzichtbar macht.

Eine Ausführungsform des erfindungsgemässen Verfahrens zeichnet sich beispielsweise dadurch aus, dass die Milchschäumvorrichtung ferner einen Lufteinlasskanal aufweist, welcher indirekt oder direkt mit dem Hohlraum verbunden ist und in welchen Luft einströmt. Diese Luft wird zusammen mit der Milch verwirbelt, wodurch die Schaumstruktur des erzeugten Milchschaums je nach beigemengter Luftmenge beispielsweise durch Vergrössern oder Verkleinern des Lufteinlasskanalquerschnittes variiert werden kann. Durch einen solchen Lufteinlasskanal, der vorzugsweise variabel gestaltet ist, kann insbesondere beim Hinzumischen von Luft zu der in den Hohlraum einströmenden (ggf. kalten) Milch der Vorteil erreicht werden, dass aus der Milchschäumvorrichtung erwärmte Milch in Kombination mit einem besonders feinporigen Milchschaum ausgegeben wird, wobei der Milchschaum die erfindungsgemässe vorteilhafte feine und dichte Schaumstruktur aufweist und zusätzlich sowohl die erwärmte ausgegebene Milch als auch der Milchschaum bereits beim Ausgeben aus der Milchschäumvorrichtung gesüsst sind.

In einer Ausführungsform des erfindungsgemässen Verfahrens wird das Süssungsmittel in den Hohlraum, welchen der eingeleitete Dampf, die angesaugte Milch und ggf. die angesaugte Luft zunächst durchströmen, eingebracht. Auf diese Weise wird erreicht, dass eine frühzeitige Durchmischung dieser Anteile Milch und Dampf und ggf. Luft gleich zu Beginn des Aufschäumvorganges erfolgt, wodurch das Gemisch aus Milch und Dampf und ggf. Luft bereits mit dem Süssungsmittel durchwirbelt wird und so eine optimale Schaumstruktur ausbilden kann.

Andererseits kann es aber genauso vorteilhaft sein, eine Emulsionskammer zwischen dem Hohlraum und dem Auslasskanal der Milchschäumvorrichtung vorzusehen, wobei dann bei der Durchführung des erfindungsgemässen Verfahrens das Süssungsmittel ausschliesslich in die Emulsionskammer oder auch in den Hohlraum und zusätzlich in die Emulsionskammer eingebracht wird. Dies ist insbesondere dann von Vorteil, wenn die Emulsionskammer von aussen zugänglich ausgebildet ist und ein manuelles Einbringen des Süssungsmittels in die Emulsionskammer möglich ist.

Das Einbringen des Süssungsmittels kann auch nicht-manuell realisiert werden, indem das Süssungsmittel in den von der Milch bzw. dem Gemisch aus Milch und Dampf und ggf. Luft durchströmten Bereich der Aufschäumvorrichtung eingeleitet wird. Ein solches Einleiten erfolgt vorzugsweise automatisch, wodurch eine genaue Dosierung des Süssungsmittels möglich ist, selbst wenn die Milchschäumvorrichtung in einem Gehäuse untergebracht sein sollte oder von anderen Gegenständen derart verdeckt sein sollte, dass ein manueller Zugriff auf die Milchschäumvorrichtung nicht möglich oder mit Schwierigkeiten verbunden sein sollte.

Hierzu kann es insbesondere vorgesehen sein, dass das Süssungsmittel in flüssiger Form, beispielsweise als Flüssigzucker oder Flüssigsüssstoff vorliegt. Das Verfahren ist jedoch keinesfalls darauf beschränkt, Flüssigsüssstoff nur durch ggf. automatisches Einleiten vorzusehen. Vielmehr kann ein solches Süssungsmittel in flüssiger Form auch manuell in den von der Milch bzw. dem Gemisch durchströmten Bereich eingebracht werden. Ein derartiges flüssiges Süssungsmittel hat den Vorteil, sich schnell mit der durchwirbelten Milch zu vermengen und ggf. darin zu lösen, wodurch der Vorgang beschleunigt werden kann.

Andererseits kann es aber auch genauso gut vorgesehen sein, Süssungsmittel in fester Form, beispielsweise in Form eines Pulvers oder in kristalliner Form oder in Form eines zu einem Block geformten Körpers (z.B. als Zuckerstück und vorzugsweise in Form eines zylinder-, würfel- oder kugelförmigen Zuckerstücks) zu verwenden. Ein festes Süssungsmittel hat den Vorteil der besseren Handhabbarkeit, wobei jedoch auch hier ein automatisches Einleiten erfolgen kann, beispielsweise wenn das feste Süssungsmittel in Pulverform vorliegt und eine entsprechend ausgebildete Pulverzuführeinrichtung an bzw. in der Milchschäumvorrichtung vorgesehen wird. Das feste Süssungsmittel, welches in den zumindest von der Milch umströmten Bereich eingebracht wird, kann dabei insbesondere derart geformt sein, dass es zumindest von der Milch umströmt wird oder auch durchströmt wird. So kann es beispielsweise vorgesehen sein, das feste Süssungsmittel als Zuckerstück auszubilden, welches ein Loch aufweist, durch welches die Milch oder ein Gemisch aus Milch und Dampf und ggf. Luft hindurchströmen kann. Durch eine derartige Formgebung wird dann erreicht, dass die Oberfläche eines solchen Zuckerstücks vergrössert ist, so dass sich wegen der vergrösserten Oberfläche eines solchen Zuckerstücks eine bessere bzw. schnellere Löslichkeit des Zuckerstücks in der das jeweilige Loch durchströmenden und/oder das jeweilige Zuckerstück umströmenden Milch ergibt.

Des Weiteren kann es bei dem erfindungsgemässen Verfahren vorgesehen sein, dass Süssungsmittel in den zumindest von der Milch durchströmten Bereich der Milchschäumvorrichtung einzubringen, bevor der Dampf in den Dampfeinlasskanal eingeleitet wird. Hierdurch wird sichergestellt, dass das Süssungsmittel sofort zur Durchmischung zur Verfügung steht, sobald die Milch bzw. das Milch-Dampfgemisch oder auch das Milch-Dampf-Luft-Gemisch den Bereich erreicht, in welchem das Süssungsmittel platziert ist. Damit kann insbesondere erreicht werden, dass das Süssungsmittels eine besonders lange Zeit auf die in der Milchschäumvorrichtung verwirbelten Milch einwirken kann und der jeweils erzeugte Milchschaum besonders intensiv und gleichmässig gesüsst wird.

Andererseits kann es aber auch vorgesehen sein, das Süssungsmittel beispielsweise durch automatisches Einleiten erst dann in den zumindest von der Milch durchströmten Bereich der Milchschäumvorrichtung einzubringen, wenn der Dampf bereits in den Dampfeinlasskanal eingeleitet wird. Ein späteres Hinzumischen des Süssungsmittels zu der verwirbelten Milch ist insbesondere dann von Vorteil, wenn die Schaumstruktur durch dieses erst spätere Hinzumischen beeinflusst werden soll. Selbstverständlich ist es aber auch möglich, das Süssungsmittel in den zumindest von der Milch durchströmten Bereich gleich zu Beginn des Aufschäumvorganges einzubringen und gleichzeitig während des Aufschäumvorganges weitere Süssungsmittel in diesen oder auch einen anderen von der Milch durchströmten Bereich einzuleiten. Dadurch ist es dann möglich, eine gleichmässige Süssung des Milchschaumes zu erhalten und gleichzeitig eine organoleptisch ansprechende Schaumstruktur zu erzeugen.

Eine erfindungsgemässe Vorrichtung zum automatischen Erzeugen von Milchschaum (im Folgenden "Milchschäumvorrichtung") weist wenigstens einen Hohlraum, einen Dampfeinlasskanal zum Einleiten von Dampf in den Hohlraum, einen Milcheinlasskanal zum Einleiten von Milch in den Hohlraum und einen Auslasskanal zur Abgabe von Milchschaum aus der Milchschäumvorrichtung auf. Diese Kanäle sind jeweils direkt oder indirekt mit dem Hohlraum verbunden. Weiterhin weist eine derartige erfindungsgemässe Milchschäumvorrichtung eine Einrichtung zum Einbringen von Süssungsmittel in einen Bereich der Milchschäumvorrichtung auf, welcher Bereich während eines Aufschäumvorganges zumindest von der Milch, in der Regel aber von einem Milch-Dampf-Gemisch oder einem Milch-Dampf-Luft-Gemisch durchströmt wird.

Eine derartige an einer solchen erfindungsgemässen Milchschäumvorrichtung vorgesehene Einrichtung zum Einbringen von Süssungsmittel ermöglicht es in vorteilhafter Weise, durch automatisches Erzeugen von Milchschaum während eines Aufschäumvorganges gleichmässig gesüssten und in seiner Schaumstruktur besonders feinen, dichten und sämigen Milchschaum zu erzeugen.

Eine Ausführungsform der Milchschäumvorrichtung kann weiterhin einen mit dem Hohlraum verbundenen Lufteinlasskanal zum Einleiten von Luft in den Hohlraum aufweisen. In diesem Fall kann somit beim Einleiten von Dampf in den Hohlraum ausser Milch auch Luft in den Hohlraum angesaugt werden, sodass im Hohlraum ein Milch-Dampf-Luft-Gemisch entsteht, welches einen besonders feinporigen Milchschaum bildet.

In vorteilhafter Weise ist die Einrichtung zum Einbringen von Süssungsmittel an einer Emulsionskammer ausgebildet, die zwischen dem Hohlraum und dem Auslasskanal der erfindungsgemässen Milchschäumvorrichtung vorgesehen ist. Der Innenraum der Emulsionskammer wird dabei während eines Aufschäumvorganges von der Milch bzw. dem Milch-Dampf-Gemisch oder dem Milch-Luft-Dampf-Gemisch durchströmt. Eine derartige Einrichtung zum Einbringen von Süssungsmittel in die Emulsionskammer der Milchschäumvorrichtung kann beispielsweise eine Verschwenkung der Emulsionskammer erlauben, sodass die Emulsionskammer oder zumindest ein Teilbereich der Emulsionskammer von aussen zugänglich wird und festes und/oder flüssiges Süssungsmittel in die Emulsionskammer eingebracht werden kann. Weiterhin ist es möglich, eine derartige Einrichtung zum Einbringen von Süssungsmittel in die Emulsionskammer als Öffnung zu dem Emulsionskammer-Innenraum auszubilden, wobei durch die Öffnung Süssungsmittel in den Innenraum der Emulsionskammer eingebracht werden kann und wobei die Öffnung nach dem Einbringen des Süssungsmittels in Vorbereitung eines Aufschäumvorganges verschlossen werden kann.

Ebenso kann es vorgesehen sein, dass die Einrichtung zum Einbringen von Süssungsmittel einen Süssungsmittel-Einlasskanal aufweist, welcher mit seinem einen Ende in den Hohlraum mündet und mit seinem anderen Ende in einen Vorratsbehälter mündet, wobei in dem Vorratsbehälter flüssiges Süssungsmittel bereitgestellt ist. Eine derartige Anordnung hat den Vorteil, dass beim Einleiten von Dampf während eines Aufschäumvorganges durch den in den Hohlraum mündenden ersten Süssungsmittel-Einlasskanal auch in letzterem ein Unterdruck erzeugt wird, wodurch durch den eingeleiteten Dampf nicht lediglich Milch und ggf. Luft, sondern auch das flüssige Süssungsmittel angesaugt werden, ohne dass für dieses flüssige Süssungsmittel zum Einleiten ein zusätzliches Gerät, wie beispielsweise eine Pumpe, ein Ventil oder ein ähnliches Aggregat, welches zum Steuern eines Zuflusses des Süssungsmittels geeignet ist, vorhanden sein muss.

Ebenso kann die Einrichtung zum Einbringen von Süssungsmittel einen Süssungsmittel-Einlasskanal aufweisen, welcher in die Emulsionskammer mündet, sodass das jeweilige Süssungsmittel durch den Süssungsmittel-Einlasskanal in die Emulsionskammer einleitbar ist. Dies ist insbesondere von Vorteil, wenn die Zugänglichkeit des Hohlraumes beispielsweise aufgrund von Platzmangel beschränkt ist oder wenn ein frühzeitiges Durchmischen der eingeleiteten Milch mit dem Süssungsmittel nicht erwünscht ist, beispielsweise um die Schaumstruktur des erzeugten Milchschaumes zu beeinflussen.

Des Weiteren kann es vorgesehen sein, die Einrichtung zum Einbringen von Süssungsmittel als automatische Einrichtung auszubilden, welche ein automatisches Einleiten insbesondere von flüssigem Süssungsmittel oder von festem, insbesondere pulverförmigem Süssungsmittel erlaubt. Eine derartige Einrichtung zum automatischen Einbringen von Süssungsmittel kann beispielsweise eine Pumpe für flüssiges Süssungsmittel oder eine Pulverfördereinrichtung für pulverförmiges oder sonstiges sich wie ein Fluid verhaltendes festes Süssungsmittel sein. Hierdurch ist ein besonders einfaches automatisches Zudosieren von Süssungsmittel während eines Aufschäumvorganges mittels der erfindungsgemässen Milchschäumvorrichtung möglich.

Im Folgenden werden bevorzugte Ausführungsbeispiele der erfindungsgemässen Milchschäumvorrichtung insbesondere zum Einsatz in einem erfindungsgemässen Verfahren zum automatischen Erzeugen von Milchschaum anhand einer Zeichnung näher erläutert.

Es zeigen:
- Fig. 1: eine Schnittansicht auf ein erstes Ausführungsbeispiel einer erfindungsgemässen Milchschäumvorrichtung;
- Fig. 2: eine Schnittansicht auf ein zweites Ausführungsbeispiel einer erfindungsgemässen Milchschäumvorrichtung; und
- Fig. 3: eine Schnittansicht auf ein drittes Ausführungs-beispiel einer erfindungsgemässen Milchschäumvorrichtung.

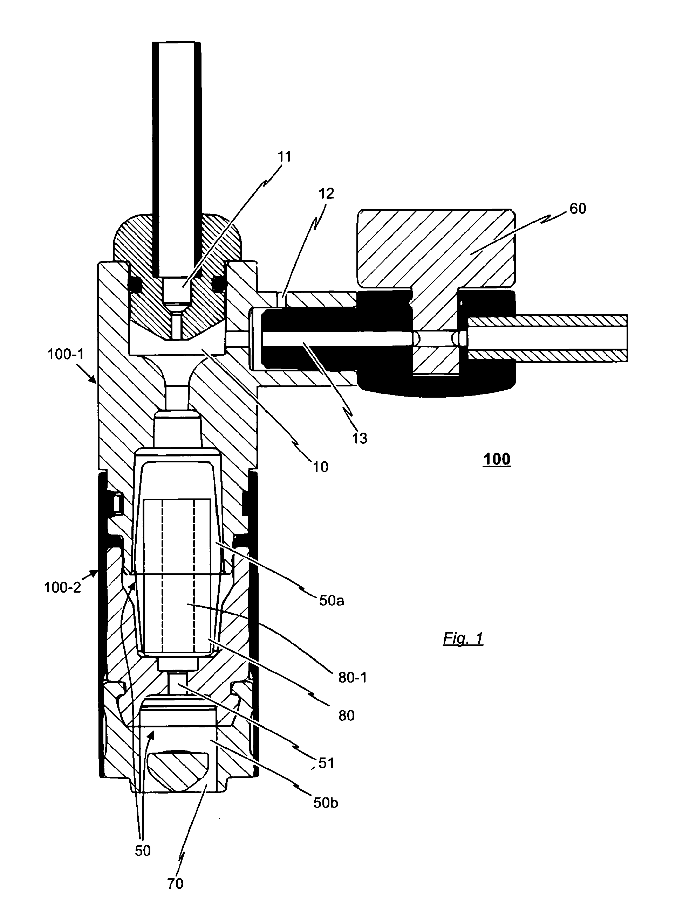

Fig. 1 zeigt eine Schnittansicht auf ein erstes Ausführungsbeispiel einer erfindungsgemässen Milchschäumvorrichtung 100, insbesondere zum Durchführen eines erfindungsgemässen Verfahrens zum automatischen Erzeugen von Milchschaum. Die Milchschäumvorrichtung 100 weist gemäss Fig. 1 einen Hohlraum 10 auf, in welchen durch einen Dampfeinlasskanal 11 Dampf, insbesondere Wasserdampf, eingeleitet werden kann, so dass dieser den Hohlraum 10 durchströmt. Ferner unmittelbar mit dem Hohlraum 10 verbunden und in Fig. 1 vom Hohlraum 10 rechts liegend dargestellt ist ein weiterer Kanal, welcher sich in einen Milcheinlasskanal 13 und einen Lufteinlasskanal 12 verzweigt. Der Lufteinlasskanal 12 erlaubt ein Einströmen von Luft in den Hohlraum 10, während der Milcheinlasskanal 13 an seinem vom Hohlraum 10 abgewandten Ende in einen in Fig. 1 nicht gezeigten Vorratsbehälter für Milch mündet.

Des Weiteren kann ein Regulierventil 60 vorgesehen sein, welches zum Zwecke der Dosierung der Milch den Milcheinlasskanal 13 teilweise verschliesst. Wird Dampf in den Dampfeinlasskanal 11 eingeleitet, entsteht durch das Vorbeiströmen am Mündungsbereich des Kanalsystems mit dem Lufteinlasskanal 12 und dem Milcheinlasskanal 13 aufgrund des Venturi-Effekts ein Unterdruck, wodurch Milch und Luft angesaugt und in den Hohlraum 10 eingeleitet werden. Im Hohlraum 10 kommt es dann zu einer Durchwirbelung dieses eingeleiteten und angesaugten Gemisches, was zur Entstehung des Milchschaumes beiträgt. Anschliessend gelangt das Gemisch in eine Emulsionskammer 50, in welcher die turbulente Strömung, welche noch im Hohlraum 10 vorliegt, abgebremst und das Gemisch homogenisiert wird, sodass in der Emulsionskammer 50 eine Emulsion aus Milch(-tropfen), Dampf (-blasen) und/oder Luft (-blasen) entsteht, welche den Milchschaum bildet.

Im gezeigten ersten Ausführungsbeispiel gemäss Fig. 1 findet in der Emulsionskammer 50 die weitere Durchmischung der angesaugten Milch mit dem Dampf und ggf. der ebenfalls angesaugten Luft statt, wodurch der Milchschaum entsteht bzw. in seiner Struktur beeinflusst bzw. verdichtet wird.

Wie Fig. 1 andeutet, ist die Emulsionskammer 50 im vorliegenden Beispiel in zwei Teilräume - den ersten Teilraum 50a und den zweiten Teilraum 50b - unterteilt, wobei die Teilräume 50a und 50b durch einen Verbindungskanal 51 verbunden sind. Der Teilraum 50a ist dabei derart mit dem Hohlraum 10 verbunden, dass das jeweils im Hohlraum 10 erzeugte Gemisch aus Milch, Dampf und Luft in den ersten Teilraum 50a der Emulsionskammer 50 eingeleitet wird und anschliessend ausschliesslich über den Verbindungskanal 51 in den zweiten Teilraum 50b der Emulsionskammer 50 gelangen kann. Der Verbindungskanal 51 hat - wie Fig. 1 andeutetet - eine Querschnittsfläche, welche wesentlich (z.B. um mehr als einen Faktor 2) geringer ist als eine Querschnittsfläche des ersten Teilraums 50a. Dadurch, dass der Verbindungskanal 51 demnach relativ eng ist im Vergleich zum Teilraum 50a und zum Teilraum 50b, wird erreicht, dass sich das jeweils in den ersten Teilraum 50a der Emulsionskammer 50 eingeleitete Gemisch aus Milch, Dampf und Luft am Verbindungskanal 51 zunächst staut, bevor es in den zweiten Teilraum 50b der Emulsionskammer 50 strömen kann, sodass sich das Gemisch aus Milch, Dampf und Luft zunächst im ersten Teilraum 50 durchmischen bzw. homogenisieren und beruhigen kann. Wenn das im ersten Teilraum 50a gestaute Gemisch aus Milch, Dampf und Luft schliesslich durch den Verbindungskanal 51 in den zweiten Teilraum 50b der Emulsionskammer 50 strömt, wird es gewöhnlich im Verbindungskanal 51 in der Längsrichtung des Verbindungskanals 51 beschleunigt, sodass das Gemisch aus Milch, Dampf und Luft den Verbindungskanal 51 in Form einer Strömung durchströmt, deren Strömungsgeschwindigkeit einen Gradienten aufweist, welcher im Wesentlichen parallel zur Strömungsgeschwindigkeit (d.h. in Längsrichtung des Verbindungskanals 51) gerichtet ist. Diese Strömung hat den Effekt, dass Milchtropfen bzw. Blasen aus Dampf und/oder Luft in der Strömung in Richtung des Gradienten der Strömungsgeschwindigkeit deformiert werden, wobei die Deformation der jeweiligen Milchtropfen bzw. Blasen aus Dampf und/oder Luft umso grösser ist, je grösser der Geschwindigkeitsgradient ist. Im vorliegenden Beispiel kann die Länge und die Querschnittsfläche des Verbindungskanals 51 so gewählt werden, dass durch den Verbindungskanal 51 strömende Milchtropfen bzw. Blasen aus Dampf und/oder Luft im Verbindungskanal 51 derart stark deformiert werden, dass einzelne Milchtropfen jeweils in mehrere kleinere Milchtropfen und einzelne Blasen aus Dampf und/oder Luft jeweils in mehrere kleinere Blasen aus Dampf und/oder Luft geteilt werden. Demzufolge gewährleistet die Aufteilung der Emulsionskammer 50 in die Teilräume 50a und 50b und die Verbindung der Teilräume 50a und 50b mittels des Verbindungskanal 51a, dass das Gemisch aus Milch, Dampf und Luft, welches über den Verbindungskanal 51 in den zweiten Teilraum 50b der Emulsionskammer 50 strömt, besonders kleine Milchtropfen und besonders kleine Blasen aus Dampf und/oder Luft umfasst und demzufolge einen besonders feinporigen Milchschaum bildet.

Wie Fig. 1 andeutet, ist im vorliegenden Beispiel - noch bevor Dampf in den Dampfeinlasskanal 11 eingeleitet wird, um Milch und ggf. Luft in den Hohlraum 10 zu saugen und den Dampf zusammen mit der angesaugten Milch und der ggf. angesaugten Luft in den Hohlraum 10 einströmen zu lassen - ein Süssungsmittel 80 in die Emulsionskammer 50 (im vorliegenden Beispiel in den ersten Teilraum 50a der Emulsionskammer 50) eingebracht worden. Das Süssungsmittel 80 liegt im vorliegenden Beispiel in Form eines Zuckerstücks vor, welches ein durchgehendes Loch 80-1 (in Fig. 1 durch zwei gestrichelte Linien angedeutet, welche die das Loch 80-1 begrenzenden Oberflächen des Zuckerstücks kennzeichnen) aufweist.

Wird nach dem Einbringen des Süssungsmittels 80 in die Emulsionskammer 50 schliesslich Dampf in den Dampfeinlasskanal 11 eingeleitet, sodass Milch und ggf. Luft in den Hohlraum 10 gesaugt wird und der Dampf zusammen mit der angesaugten Milch und der ggf. angesaugten Luft in Form eines Milch-Dampf-Gemischs bzw. eines Milch-Dampf-Luft-Gemischs in die Emulsionskammer 50 einströmt, so umströmt das jeweilige Milch-Dampf-Gemisch bzw. Milch-Dampf-Luft-Gemisch die Oberfläche des Süssungsmittels 80 und kann dabei auch das Loch 80-1 durchströmen, mit dem Ergebnis, dass das Süssungsmittel 80 im jeweiligen Milch-Dampf-Gemisch bzw. Milch-Dampf-Luft-Gemisch mindestens teilweise oder ggf. ganz aufgelöst wird, wodurch sich ein homogen gesüsster und in seiner Struktur feiner und dichter Milchschaum ausbildet, welcher anschliessend den Verbindungskanal 51 durchströmt und in den zweiten Teilraum 50b der Emulsionskammer 50 gelangt. Im unteren Bereich der erfindungsgemässen und in Fig. 1 gezeigten Milchschäumvorrichtung 100 ist ein Auslasskanal 70 in Form eines Auslass-Ringspaltes ausgebildet, durch welchen der automatisch erzeugte gesüsste Milchschaum anschliessend aus der Emulsionskammer 50 ausgegeben wird.

Um zu ermöglichen, dass das Süssungsmittel 80 im Ausführungsbeispiel gemäss Fig. 1 in die Emulsionskammer 50 eingebracht werden kann, ist die Milchschäumvorrichtung 100 so konstruiert, dass sie aus zwei Teilen - einem Oberteil 100-1 und einem Unterteil 100-2 - zusammengesetzt ist, wobei der Unterteil 100-2 relativ zum Oberteil 100-1 zwischen verschiedenen Stellungen bewegbar ist. In einer der jeweiligen Stellungen (wie in Fig. 1 dargestellt) begrenzen der Oberteil 100-1 und der Unterteil 100-2 gemeinsam die Emulsionskammer 50. Ausgehend von der in Fig. 1 dargestellten Stellung ist der Unterteil 100-2 relativ zum Oberteil 100-1 derart in eine andere Stellung bewegbar (in Fig. 1 nicht dargestellt), in welcher der Unterteil 100-2 vom Oberteil 100-1 derart separiert ist, dass die Emulsionskammer 50 von aussen zugänglich ist, sodass das Süssungsmittel 80 (in der in Fig. 1 dargestellten Form) in die Emulsionskammer 50 (z.B. in den ersten Teilraum 50a der Emulsionskammer 50) einbringbar ist und schliesslich in der Emulsionskammer 50 zwischen dem Oberteil 100-1 und dem Unterteil 100-2 eingeschlossen wird, wenn der Unterteil 100-2 wieder in die Fig. 1 dargestellte Stellung gebracht wird.

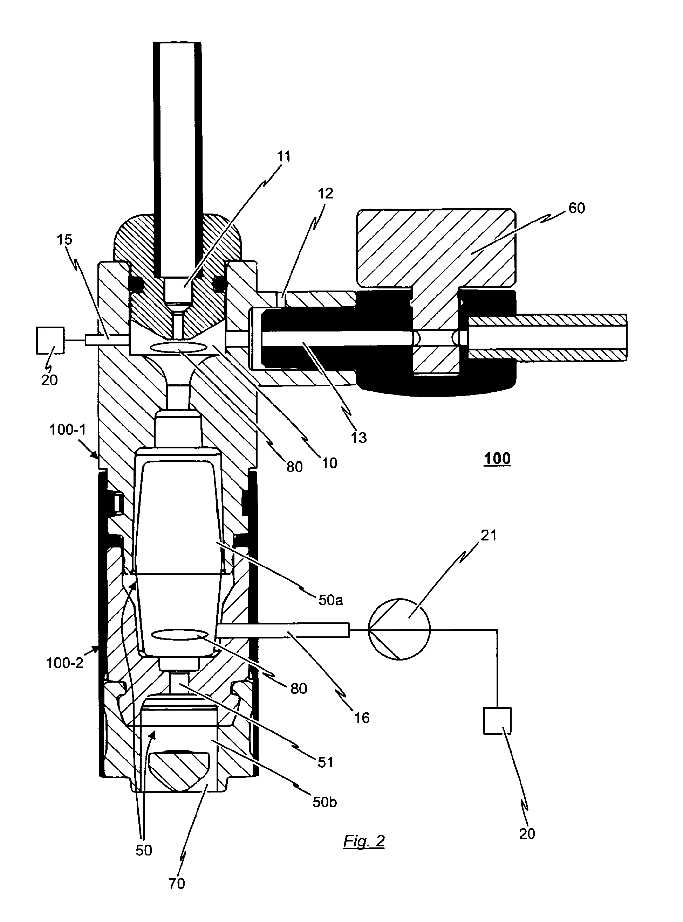

Fig. 2 zeigt eine Schnittansicht eines zweiten Ausführungsbeispiels der erfindungsgemässen Milchschäumvorrichtung 100, insbesondere zur Durchführung des erfindungsgemässen Verfahrens zum automatischen Erzeugen von Milchschaum, wobei gleiche Bezugszeichen gleiche bzw. gleich wirkende Elemente wie in Fig. 1 darstellen. Zusätzlich zu dem ersten Ausführungsbeispiel aus Fig. 1 ist beim zweiten Ausführungsbeispiel gemäss Fig. 2 ein erster Süssungsmittel-Einlasskanal 15 vorhanden, welcher in den Hohlraum 10 mündet. Schematisch dargestellt ist, dass ein Vorratsbehälter 20 für flüssiges Süssungsmittel mit dem anderen Ende des ersten Süssungsmittel-Einlasskanals 15 verbunden ist. Bei einem Aufschäumvorgang und dem damit verbundenen Einleiten von Dampf in den Dampfeinlasskanal 11 wird ebenfalls aufgrund des Venturi-Effektes auch in diesem ersten Süssungsmittel-Einlasskanal 15 ein Unterdruck erzeugt, was ein Einströmen des flüssigen Süssungsmittels 80 in den Hohlraum 10 durch den ersten Süssungsmittel-Einlasskanal 15 bewirkt. Es findet hier also bereits ein frühzeitiges Durchmischen der eingeleiteten bzw. angesaugten Komponenten Dampf, Milch, Luft sowie flüssiges Süssungsmittel 80 statt. In ähnlicher Weise wie im ersten Ausführungsbeispiel gemäss Fig. 1 gelangt anschliessend dieses Gemisch in die Emulsionskammer 50, wobei in diesem zweiten Ausführungsbeispiel gemäss Fig. 2 an der Emulsionskammer 50 ein zusätzlicher, in diese Kammer mündender zweiter Süssungsmittel-Einlasskanal 16 vorgesehen ist. Da innerhalb der Emulsionskammer 50 kein nennenswerter Unterdruck entsteht, ist zum Transport des flüssigen Süssungsmittels 80 durch diesen zweiten Süssungsmittel-Einlasskanal 16 eine aktive Einleiteinrichtung 21 für flüssiges Süssungsmittel, zweckmässiger Weise eine Pumpe, vorgesehen, welche flüssiges Süssungsmittel 80 aus einem Vorratsbehälter 20 durch diesen zweiten Süssungsmittel-Einlasskanal 16 in das Innere der Emulsionskammer 50 einleitet. Hier findet dann analog zum ersten Ausführungsbeispiel aus Fig. 1 ein weiteres Durchmischen mit dem in die Emulsionskammer 50 eingeleiteten flüssigen Süssungsmittels 80 statt, bevor das Gemisch, d.h. der gesüsste Milchschaum mit feiner und dichter Struktur, in den Verbindungskanal 51 eingeleitet und durch den Auslasskanal 70 ausgegeben wird.

Selbstverständlich ist es auch möglich, in Anlehnung an das zweite Ausführungsbeispiel gemäss Fig. 2 jeweils nur einen der beiden Süssungsmittel-Einlasskanäle 15, 16 mit zugeordnetem Vorratsbehälter 20 für flüssiges Süssungsmittel und ggf. Einleiteinrichtung 21 vorzusehen. Dies bedeutet, dass es selbstverständlich ebenso möglich ist, nur in den Hohlraum 10 bzw. nur in die Emulsionskammer 50 Süssungsmittel 80 einzuleiten, um die erfindungsgemässe Wirkung zu erzielen.

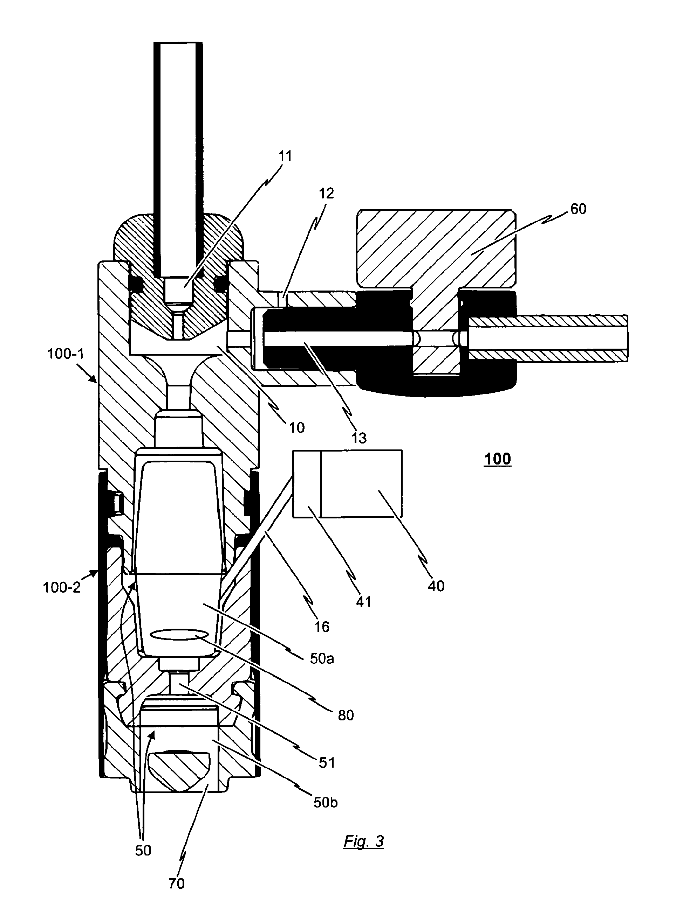

In dem in Fig. 3 gezeigten dritten Ausführungsbeispiel wird durch den dort ebenfalls vorgesehenen zweiten Süssungsmittel-Einlasskanal 16 im Unterschied zum zweiten Ausführungsbeispiel gemäss Fig. 2 kein flüssiges, sondern festes Süssungsmittel 80 ins Innere der Emulsionskammer 50 eingeleitet. Hierzu ist statt des Vorratsbehälters 20 für flüssiges Süssungsmittel ein Vorratsbehälter 40 für festes, ggf. pulverförmiges Süssungsmittel vorgesehen, welches mittels einer Einleiteinrichtung 41 ins Innere der Emulsionskammer eingeleitet werden kann, wo analog zu den beiden vorgehend beschriebenen Ausführungsbeispielen eine Durchmischung mit dem sich ggf. auflösenden Süssungsmittel 80 stattfindet. Ebenso wie die Einleiteinrichtung 21 für flüssiges Süssungsmittel gemäss dem in Fig. 2 dargestellten zweiten Ausführungsbeispiel kann die Einleiteinrichtung 41 für festes, ggf. pulverförmiges Süssungsmittel gemäss dem in Fig. 3 dargestellten dritten Ausführungsbeispiel manuell bedienbar oder auch automatisch wirkend sein. Insbesondere in einer automatischen Ausführung ist ein automatisches Zudosieren einer vorgegebenen Menge an Süssungsmittel auf einfache Weise möglich.

## Patentansprüche

1. Verfahren zum automatischen Erzeugen von Milchschaum in einer Milchschäumvorrichtung (100), wobei die Milchschäumvorrichtung (100) wenigstens einen Hohlraum (10), einen Dampfeinlasskanal (11) zum Einleiten von Dampf in den Hohlraum (10), einen Milcheinlasskanal (13) zum Einleiten von Milch in den Hohlraum (10) und einen Auslasskanal (70) zur Abgabe von Milchschaum aus der Milchschäumvorrichtung (100) aufweist und wobei die jeweiligen Kanäle (11, 13, 70) jeweils mit dem Hohlraum (10) direkt oder indirekt verbunden sind,
wobei das Verfahren die folgenden Verfahrensschritte aufweist:
Einleiten von Dampf in den Dampfeinlasskanal (11), um Milch in den Hohlraum (10) strömen zu lassen und zu verwirbeln;
Ausgabe zumindest der verwirbelten Milch in den Auslasskanal (70);
**dadurch gekennzeichnet, dass**
das Verfahren weiterhin den folgenden Verfahrensschritt aufweist:
Einbringen eines Süssungsmittels (80) in einen zumindest von der Milch durchströmten Bereich der Milchschäumvorrichtung (100).

2. Verfahren nach Anspruch 1,
wobei die Milchschäumvorrichtung (100) ferner einen direkt oder indirekt mit dem Hohlraum (10) verbundenen Lufteinlasskanal (12) zum Einleiten von Luft in den Hohlraum (10) aufweist und wobei in den Hohlraum (10) strömende Luft zusammen mit der Milch verwirbelt wird.

3. Verfahren nach Anspruch 1 oder 2,
wobei das Süssungsmittel (80) in den Hohlraum (10) eingebracht wird.

4. Verfahren nach einem der vorhergehenden Ansprüche,
wobei die Milchschäumvorrichtung (100) weiterhin eine Emulsionskammer (50) zwischen dem Hohlraum (10) und dem Auslasskanal (70) aufweist und wobei das Süssungsmittel (80) in die Emulsionskammer (50) eingebracht wird.

5. Verfahren nach einem der vorhergehenden Ansprüche,
wobei das Süssungsmittel (80) in flüssiger Form in den zumindest von der Milch durchströmten Bereich der Milchschäumvorrichtung (100) eingebracht wird.

6. Verfahren nach einem der vorhergehenden Ansprüche,
wobei das Süssungsmittel (80) in fester Form in den zumindest von der Milch durchströmten Bereich der Milchschäumvorrichtung (100) eingebracht wird.

7. Verfahren nach Anspruch 6,
wobei das Süssungsmittel (80) als Pulver oder in kristalliner Form oder als zu einem Block geformter Körper ausgebildet ist.

8. Verfahren nach einem der Ansprüche 6 oder 7,
wobei das Süssungsmittel (80) derart geformt ist, dass es nach dem Einbringen in den zumindest von der Milch durchströmten Bereich der Milchschäumvorrichtung (100) zumindest von der Milch umströmt und/oder durchströmt wird.

9. Verfahren nach einem der vorhergehenden Ansprüche,
wobei das Süssungsmittel (80) in dem zumindest von der Milch durchströmten Bereich eingebracht wird, bevor der Dampf in den Dampfeinlasskanal (11) eingeleitet wird.

10. Verfahren nach einem der Ansprüche 1 bis 8,
wobei das Süssungsmittel (80) in dem zumindest von der Milch durchströmten Bereich eingebracht wird, während der Dampf in den Dampfeinlasskanal (11) eingeleitet wird.

11. Milchschäumvorrichtung (100) zum automatischen Erzeugen von Milchschaum, wobei die Milchschäumvorrichtung (100) wenigstens einen Hohlraum (10), einen Dampfeinlasskanal (11) zum Einleiten von Dampf in den Hohlraum (10), einen Milcheinlasskanal (13) zum Einleiten von Milch in den Hohlraum (10) und einen Auslasskanal (70) zur Abgabe von Milchschaum aus der Milchschäumvorrichtung (100) aufweist und wobei die jeweiligen Kanäle (11, 13, 70) jeweils mit dem Hohlraum (10) direkt oder indirekt verbunden sind,
**dadurch gekennzeichnet, dass**
die Milchschäumvorrichtung (100) weiterhin eine Einrichtung zum Einbringen von Süssungsmittel in einen während eines Aufschäumvorganges zumindest von der Milch durchströmten Bereich der Milchschäumvorrichtung (100) aufweist.

12. Milchschäumvorrichtung (100) nach Anspruch 11,
mit einem mit dem Hohlraum (10) verbundenen Lufteinlasskanal (12) zum Einleiten von Luft in den Hohlraum (10).

13. Milchschäumvorrichtung (100) nach einem der Ansprüche 11 oder 12,
welche eine zwischen dem Hohlraum (10) und dem Auslasskanal (70) angeordnete Emulsionskammer (50) aufweist, wobei die Einrichtung zum Einbringen von Süssungsmittel an der Emulsionskammer (50) derart ausgebildet ist, dass der während eines Aufschäumvorganges zumindest von der Milch durchströmte Innenraum der Emulsionskammer (50) zum Einbringen von Süssungsmittel (80) zugänglich ist.

14. Milchschäumvorrichtung (100) nach Anspruch 13,
wobei die Einrichtung (41) zum Einbringen von Süssungsmittel einen in die Emulsionskammer (50) mündenden Süssungsmittel-Einlasskanal (16) zum Einbringen von Süssungsmittel (80) in die Emulsionskammer umfasst.

15. Milchschäumvorrichtung (100) nach einem der Ansprüche 11 bis 14,
wobei die Einrichtung zum Einbringen von Süssungsmittel einen in den Hohlraum (10) mündenden Süssungsmittel-Einlasskanal (15) aufweist, welcher mit einem Vorratsbehälter (20) für flüssiges Süssungsmittel (80) verbunden ist.

16. Milchschäumvorrichtung (100) nach einem der Ansprüche 11 bis 15,
wobei die Einrichtung zum Einbringen von Süssungsmittel eine Einrichtung zum automatischen Einbringen von Süssungsmittel oder eine Einleiteinrichtung (21) zum automatischen Einleiten von flüssigem Süssungsmittel (80) oder eine Einleiteinrichtung (41) zum automatischen Einleiten von festem oder pulverförmigem Süssungsmittel (80) ist.
